# EUROPEAN PATENT APPLICATION

(11) **EP 1 932 861 A1**
(43) Date of publication of application: **18.06.2008**
(21) Application number: 06810879.4
(22) Date of filing: 29.09.2006
(51) Int. Cl.: C08F 220/36, C08F 8/16, C08F 220/18

(54) **AMORPHOUS THERMOPLASTIC RESIN AND EXTRUDED FILM OR SHEET**

(30) Priority: 03.10.2005 JP 2005290572
(71) Applicant: NIPPON SHOKUBAI CO., LTD., Osaka-shi, Osaka 541-0043 (JP)
(72) Inventor: IZUMI, Hiroko, Kasuga-shi Fukuoka 816-0853 (JP); NAKATA, Yoshitomo, Nishinomiya-shi Hyogo 663-8152 (JP); UEDA, Kenichi, Nara-shi Nara 631-0815 (JP)
(74) Representative: Hart-Davis, Jason
(86) International application number: PCT/JP2006/319481
(87) International publication number: WO 2007/040182

(57) **Abstract**

To provide an amorphous thermoplastic resin and a film or sheet each having high transparency and high heat resistance and a UV-absorbing ability, which can be used in various optical materials which needs to have excellent optical characteristics and well-balanced mechanical strength, molding processability, and surface hardness. An amorphous thermoplastic resin including a UV-absorbing monomer unit and having a glass transition temperature of 120°C or more, in which the amorphous thermoplastic resin has a light transmittance of 80% or more at 500 nm and a light transmittance of less than 30% at 380 nm.

## Description

### TECHNICAL FIELD

The present invention relates to amorphous thermoplastic resins and extruded films or sheets. More specifically, the present invention relates to an amorphous thermoplastic resin preferably used as an optical material that needs excellent optical characteristics, and an extruded film or sheet made of such a resin.

### BACKGROUND ART

Acrylic resins as typified by PMMA (polymethylmethacrylate) are excellent in optical characteristics such as a high light transmittance and have a mechanical strength, a molding processability, and a surface hardness, which are well-balanced. Therefore, such acrylic resins have been used for various optical materials. However, such acrylic resins have a problem in that the resin turns yellow to reduce transparency when being exposed to UV light. Therefore, a UV absorber is generally added to the acrylic resins. Such a UV absorber has a low molecular weight and therefore easily bleeds out. Further, the addition amount of the UV absorber decreases due to transpiration during a molding process, and the UV-absorbing ability is reduced, and further, contamination of production steps is generated, for example. Thus, the acrylic resins have such various problems.

For example, Japanese Kokai Publication No. Hei-05-170941 on pages 1 and 2 discloses a method of homopolymerizing or copolymerizing a UV-absorbing monomer as an attempt to solve such problems. However, common acrylic resins have low heat resistance, and therefore, the acrylic resins themselves have insufficient shape stability at high temperatures. Therefore, there are only methods of kneading, laminating, or coating such acrylic resins over another resin.

In addition, Japanese Kokai Publication Nos. 2000-230016 on pages 1 and 2, 2001-151814 on pages 1 and 2, 2002-120326 on pages 1 and 2 each disclose a lactone ring-containing polymer obtained by a lactone cyclized condensation reaction of a polymer containing a hydroxyl group and an ester group in the molecular chain as a thermoplastic resin having both transparency and heat resistance. Further, Japanese Kokai Publication No. Hei-09-324016 on pages 1 and 2 discloses a polymer obtained by copolymerizing N-substituted maleimide with methacrylic acid ester. However, these polymers have high heat resistance, and therefore, they are molded at a molding temperature higher than that of common acrylic resins. Therefore, transpiration of a UV absorber with a low molecular weight or contamination of production steps, attributed to the transpiration, are easily generated.

### DISCLOSURE OF THE INVENTION

### Problem to be Solved by the Invention

The present invention has been made in view of the above-mentioned state of the art. The present invention has an object to provide an amorphous thermoplastic resin and an extruded film or sheet, which has high transparency, high heat resistance, and a UV-absorbing ability.

### Means for Solving the Problem

The present inventors made various investigations on amorphous thermoplastic resins. The inventors noted that an amorphous thermoplastic resin having a glass transition temperature of 120°C or more has heat resistance (thermal decomposition resistance). The inventors found that the amorphous thermoplastic resin has transparency and a UV-absorbing ability if the resin has a UV-absorbing monomer. Further, the inventors found that if the amorphous thermoplastic resin has a lactone ring structure obtained by a lactone cyclized condensation reaction of a copolymer obtained by copolymerizing methacrylic ester with a monomer including a UV-absorbing monomer, and a hydroxyl group and an ester group in the molecular chain, the amorphous thermoplastic resin has high transparency, high heat resistance, and a UV-absorbing ability. As a result, the above-mentioned problems can be admirably solved.

That is, the present invention is an amorphous thermoplastic resin comprising a UV-absorbing monomer unit and having a glass transition temperature of 120°C or more.
The present invention is mentioned in more detail below.

The amorphous thermoplastic resin of the present invention is not especially limited as long as it has a polymer structural unit (repeating structural unit) formed by polymerizing a UV-absorbing monomer and has a glass transition temperature of 120°C or more. Examples thereof include lactone ring-containing polymers, maleimide polymers, glutaric anhydride polymers, and glutarimide polymers. Among them, lactone ring-containing polymers or maleimide polymers are preferable. The above-mentioned amorphous thermoplastic resin means a thermoplastic resin having no melting point.

The glass transition temperature (Tg) of the amorphous thermoplastic resin in the present invention is preferably 120°C or more, and more preferably 125°C or more, and still more preferably 130°C or more, and further more preferably 135°C or more, and most preferably 140°C or more. The glass transition temperature used herein means a temperature at which polymer molecules start micro-Brownian motion, and can be measured by various methods. In the present invention, it is defined that the glass transition temperature is a temperature determined by a midpoint method in accordance with ASTM-D-3418 using a Differential Scanning Calorimetry (DSC). If a plurality of glass transition temperatures are observed, a main transition temperature at which an endothermic amount is larger is adopted in the present invention.

It is preferable that the amorphous thermoplastic resin has a light transmittance of 80% or more at 500 nm and a light transmittance of less than 30% at 380 nm when the resin has a thickness of 100 µm. If the light transmittance is within such a range, the resin canbe preferably used in various applications, particularly optical applications such as an optical material. It is preferable that the optical material is almost colorless. If the amorphous thermoplastic resin is colored, the product value as an optical material is remarkably reduced. The wavelength of 500 nm is in an optical wavelength range. Therefore, the light transmittance of 80% or more at this wavelength, that is, the light absorption of less than 20%, means that optical light is hardly absorbed and the amorphous thermoplastic resin is almost colorless. If the light transmittance at 500 nm is less than 80%, the resin absorbs optical light and it is remarkably colored, which leads to reduction in transparency. As a result, such a resin might not be preferably used as an optical material. The amorphous thermoplastic resin of the present invention is preferably used as an optical material having a function of cutting UV light. The UV light has high energy, and therefore deteriorates various materials. In order to protect the materials from UV light, materials for cutting the UV light have been needed. It is preferable that such materials for cutting the UV light have a transmittance of less than 30% at 380 nm. If the transmittance at 380 nm is 30% or more, the UV-cutting function is insufficient, and the materials can not be sufficiently protected from UV light, which causes deterioration such as yellowing of the materials. If the above-mentioned amorphous thermoplastic resin has a light transmittance of less than 30% at 380 nm, the light transmittance at a wavelength of 380 nm in a UV range is suppressed to less than 30%. Therefore, the UV transmittance can be suppressed. As mentioned above, it is preferable that the light transmittance of the amorphous thermoplastic resin is within the above-mentioned range. Such a resin can be preferably used as a filmor sheet having transparent appearance and a UV-cutting function.
The above-mentioned light transmittance is measured in accordance with JIS K7361-1: 1997. If the resin is hard to mold, the resin is dissolved in a proper solvent at a concentration corresponding to a thickness of 100 µm and charged in a quartz cell with an optical length corresponding to a thickness of 100 µm, and thus-prepared solution may be measured for light transmittance. For example, if the measurement is performed using a quartz cell with an optical length of 1 cm, first only a solvent is charged into the quartz cell and measured for light transmittance as a blank. Then, a 1% by weight (weight %, mass % or % by mass) solution of a resin to be measured is prepared and charged into the cell so as not to enter bubbles thereinto and then measured for light transmittance. Then, using a difference in light transmittance between the blank and the solution as a light transmittance intensity, the transmittance of the resin can be calculated.
The solvent needs to absolutely dissolve the resin to be measured. Solvents that hardly absorb light at 380 nm and 500 nm as little as possible are preferably selected. Specifically, if the amorphous thermoplastic resin in pellet form is used, a 1% by weight chloroform solution of the pellet is prepared and measured for the above-mentioned light transmittance. Hereinafter, the light transmittance measured using the 1% by weight chloroform solution can be adopted as the light transmittance of the resin having a thickness of 100 µm.
That is, the amorphous thermoplastic resin of the present invention preferably has a light transmittance of 80% or more at 500 nm when the resin has a thickness of 100 µm. The light transmittance is more preferably 85% or more, and still more preferably 95% or more. If the light transmittance at 500 nm is less than 80%, the transparency is reduced, and therefore the resin might not be used in an originally intended application. The light transmittance at 380 nm when the resin has a thickness of 100 µm is preferably less than 30%, and more preferably less than 20%, and still more preferably less than 10%. If the light transmittance at 380 nmis 30% or more, the UV light is sufficiently cut, and the resin might turn yellow.

It is preferable that the amorphous thermoplastic resin of the present invention has a weight average molecular weight of 1000 to 300000. The weight average molecular weight is more preferably 5000 to 250000, and still more preferably 10000 to 20000, and particularly preferably 50000 to 200000.

It is preferable that the amorphous thermoplastic resin in the present invention has a 5% weight reduction temperature of 280°C or more according to the thermogravimetric analysis (TG). The 5% weight reduction temperature is more preferably 290°C or more and still more preferably 300°C or more. The 5% weight reduction temperature according to the thermogravimetric analysis (TG) is an indicator of thermal stability. If such a temperature is less than 280°C, the resin might not exhibit sufficient thermal stability.

It is preferable that the amorphous thermoplastic resin of the present invention has a total residual volatile content of 5000 ppm or less, and more preferably 2000 ppm or less. If the total residual volatile content is more than 5000 ppm, the resin is colored or volatilized, or causes molding defects such as silver streak, due to alternation during molding.

The amorphous thermoplastic resin of the present invention has a polymer structural unit (repeating structural unit) formed by polymerizing a UV-absorbing monomer. Any monomer showing a UV absorptivity may be used as the UV-absorbing monomer. Polymerizable group-introduced benzotriazole derivatives, triazine derivatives, or benzophenone derivatives are preferable.

Specific examples of the above-mentioned UV-absorbing monomer include: benzotriazole UV-absorbing monomers such as 2-[2'-hydroxy-5'-methacryloyloxy]ethylphenyl]-2H-benzotriaz ole (RUVA-93), 2-[2'-hydroxy-5'-methacryoyloxy]phenyl-2H-benzotriazole, 2-[2'-hydroxy-3'-t-butyl-5'-methacryloyloxy]phenyl]-2H-benz otriazole, and UVA-5 represented by the following formula; and triazine derivatives such as UVA-2, UVA-3, and UVA-4, represented by the following formulae, respectively. Only one species of these UV-absorbing monomers may be used or two or more species of them may be used in combination. Among these, the benzotriazole UV-absorbing monomers and the triazine derivatives are more preferable. RUVA-93, UVA-2, UVA-3, UVA-4, and UVA-5 are particularly preferable. These monomers have a high UV-absorbing ability at a small amount. Therefore, the resin exhibits sufficient high operation and effects attributed to the small amount of repeating units derived from these monomers. Therefore, the amount of structural units other than the UV-absorbing monomer unit in the amorphous thermoplastic resin can be relatively increased, and therefore, an amorphous thermoplastic resin having sufficient thermoplasticity, which can be preferably used in various applications such as a film, can be obtained. Further, the resin includes a small amount of the structural unit derived from the UV-absorbing monomer. Therefore, coloring of the amorphous thermoplastic resin and products such as a film, made of such a resin, can be suppressed, and therefore the resin and the products can be preferably used in various applications. Particularly, UVA-5 has a high UV-absorbing ability and shows a UV-absorbing ability equivalent to that of other UV-absorbing monomers even at a small amount. UVA-2:

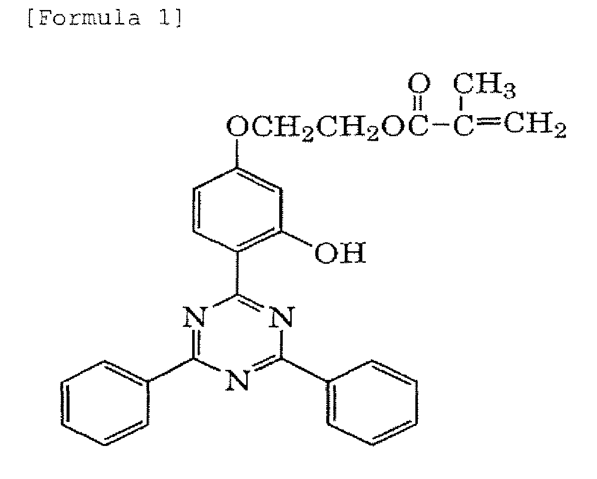

UVA-3:

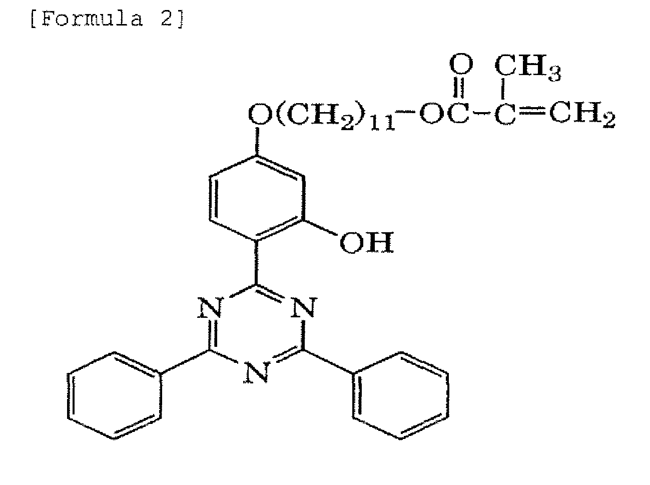

UVA-4 :

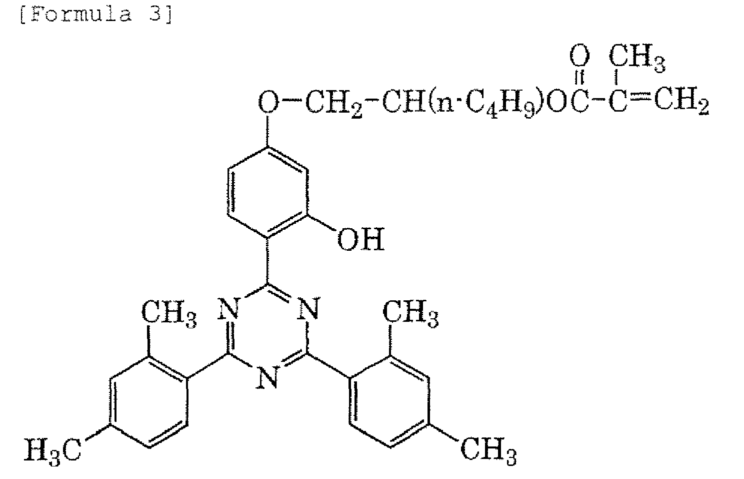

UVA-5:

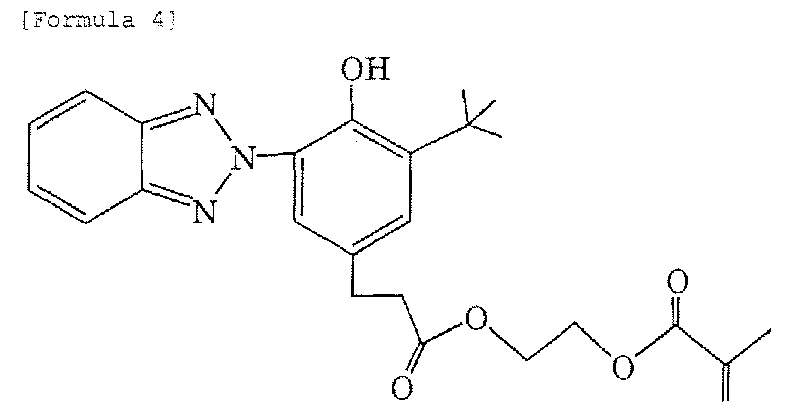

It is preferable in the present invention that the amorphous thermoplastic resin contains 15% by weight or less of the UV-absorbing monomer unit. Preferable embodiments of the present invention include an embodiment in which the above-mentioned content of the UV-absorbing monomer is 10% by weight or less. The content of the UV-absorbing monomer is more preferably 1 to 10% by weight, and still more preferably 2 to 7% by weight, and particularly preferably 3 to 5% by weight. If the content of the UV-absorbing monomer unit is less than 1% by weight, the UV-absorbing ability of the obtained polymer might be insufficient, which is not preferable. In contrast, if the content of the UV-absorbing monomer unit is more than 15% by weight, the obtained polymer has low heat resistance, which is not economically preferable.

It is preferable that the amorphous thermoplastic resin of the present invention is a lactone ring-containing polymer. The lactone ring-containing polymer preferably has a lactone ring structure represented by the following formula (1) :

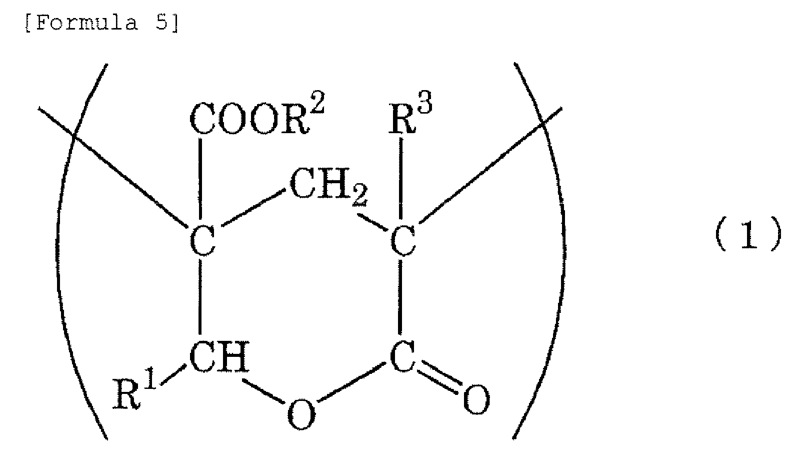

in the formula, R¹, R², and R³ being the same or different (each independently), and representing a hydrogen atom or an organic residue containing 1 to 20 carbon atoms; and the organic residue may contain one or more oxygen atoms. That is, the preferable embodiments of the present invention include an embodiment in which the amorphous thermoplastic resin has the lactone ring structure represented by the above formula (1).
In the present description, specific examples of the organic residue include: alkyl groups containing 1 to 20 carbon atoms such as a methyl group, an ethyl group, a propyl group; unsaturated aliphatic hydrocarbon groups containing 1 to 20 carbon atoms such as an ethenyl group and a propenyl group; aromatic hydrocarbon groups containing 1 to 20 carbon atoms such as a phenyl group and a naphthyl group; groups obtained by substituting one or more hydrogen atoms of the above-mentioned alkyl groups, the above-mentioned unsaturated hydrocarbon groups, and the above-mentioned aromatic hydrocarbon groups with a hydroxyl group; groups obtained by substituting one or more hydrogen atoms of the above-mentioned alkyl groups, the above-mentioned unsaturated hydrocarbon groups, and the above-mentioned aromatic hydrocarbon groups with a carboxyl group; groups obtained by substituting one or more hydrogen atoms of the above-mentioned alkyl groups, the above-mentioned unsaturated hydrocarbon groups, and the above-mentioned aromatic hydrocarbon groups with an ether group; and groups obtained by substituting one or more hydrogen atoms of the above-mentioned alkyl groups, the above-mentioned unsaturated hydrocarbon groups, and the above-mentioned aromatic hydrocarbon groups with an ester group. That is, the alkyl groups containing 1 to 20 carbon atoms, the unsaturated aliphatic hydrocarbon groups containing 1 to 20 carbon atoms, the aromatic hydrocarbon groups containing 1 to 20 carbon atoms, or groups obtained by substituting at least one or more of these groups with a hydroxyl group, a carboxyl group, an ether group, or an ester group, are preferable.
The content of the lactone ring structure in the lactone ring-containing polymer is preferably 5 to 90% by weight, and more preferably 10 to 70% by weight, and still more preferably 10 to 60% by weight, and particularly preferably 10 to 50% by weight. If the content of the lactone ring structure represented by the above formula (1) is smaller than 5% by weight, the heat resistance, the solvent resistance, and the surface hardness might become insufficient, which is not preferable.

The lactone ring-containing polymer may include a structure other than the structure represented by the above formula (1). Preferable examples of the structure other than the lactone ring structure represented by the above formula (1) include a polymer structural unit (repeating unit) formed by polymerizing at least one selected from (meth) acrylic acid esters, hydroxyl group-containing monomers, unsaturated carboxylic acids, and monomers represented by the following formula (2), as mentioned below as a production method of the lactone ring-containing polymer.

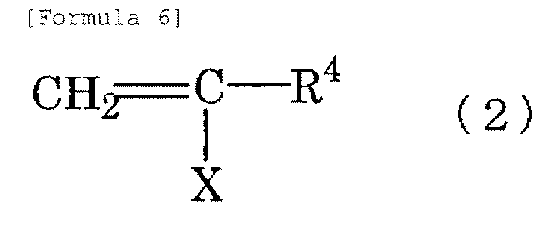

in the formula, R⁴ representing a hydrogen atom or a methyl group; X representing an alkyl group containing 1 to 20 carbon atoms, aryl group, -OAc group, -CN group, -CO-R⁵ group, or -C-O-R⁶ group; Ac group representing an acetyl group; R⁵ and R⁶ representing a hydrogen atom or an organic residue containing 1 to 20 carbon atoms).

The content of the structure other than the lactone ring structure represented by the above formula (1) in the lactone ring-containing polymer structure is preferably 10 to 95% by weight, and more preferably 10 to 90% by weight, and still more preferably 40 to 90% by weight, and particularly preferably 50 to 90% by weight if the polymer structural unit (repeating structural unit) is formed by polymerizing the (meth)acrylic acid ester. If the lactone ring-containing polymer contains a polymer structural unit (repeating structural unit) formed by polymerizing the hydroxyl group-containing monomer, the content thereof is preferably 0 to 30% by weight, and more preferably 0 to 20% by weight, and still more preferably 0 to 15% by weight, and particularly preferably 0 to 10% by weight. If the lactone ring-containing polymer contains a polymer structural unit (repeating structural unit) formed by polymerizing the unsaturated carboxylic acid, the content thereof is preferably 0 to 30% by weight, and more preferably 0 to 20% by weight, and still more preferably 0 to 15% by weight, and particularly preferably 0 to 10% by weight. If the lactone ring-containing polymer contains a polymer structural unit (repeating structural unit) formed by polymerizing the monomer represented by the formula (2a), the content thereof is preferably 0 to 30% by weight, and more preferably 0 to 20% by weight, and still more preferably 0 to 15% by weight, and particularly preferably 0 to 10% by weight.

The production method of the lactone ring-containing polymer is not especially limited. The lactone ring-containing polymer is preferably obtained by forming a polymer (a) including a hydroxyl group and an ester group in the molecular chain through a polymerization step, and performing a lactone cyclized condensation step in which the obtained polymer (a) is heated, thereby introducing a lactone ring structure into the polymer (a).
In the polymerization step, a monomer component including a monomer represented by the following formula (3):

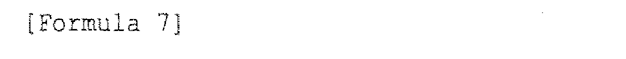

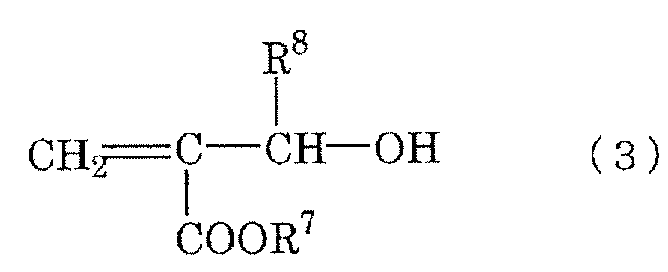

in the formula, R⁷ and R⁸ each independently representing a hydrogen atom or an organic residue containing 1 to 20 carbon atoms, is polymerized, thereby obtaining a polymer including a hydroxyl group and an ester group in the molecular chain.
Examples of the monomer represented by the above formula (3) include methyl 2-(hydroxymethyl)acrylate, ethyl 2-(hydroxymethyl)acrylate, isopropyl 2-(hydroxymethyl)acrylate, normalbutyl 2-(hydroxymethyl)acrylate, and t-butyl 2-(hydroxymethyl)acrylate. Among them, methyl 2-(hydroxyethyl)acrylate and ethyl 2- (hydroxymethyl) acrylate are particularly preferable, and methyl 2-(hydroxymethyl)acrylate is particularly preferable because of high effects of improvement in heat resistance. Only one species of the monomers represented by the above formula (3) may be used, and two or more species of them may be used.

The content of the monomer represented by the above formula (3) in the monomer component subjected to the polymerization step is preferably 5 to 90% by weight, and more preferably 10 to 70% by weight, and still more preferably 10 to 60% by weight, and particularly preferably 10 to 50% by weight. If the content of the monomer represented by the above formula (3) in the monomer component subjected to the polymerization step is more than 90% by weight, gelling is caused at the time of the polymerization or the lactone cyclizaton, or the obtained resin might have an insufficient molding property, which is not preferable.

The monomer component subjected to the polymerization step may contain a monomer other than the monomer represented by the above formula (3). Examples of such a monomer include (meth) acrylic acid esters, hydroxyl group-containing monomers, unsaturated carboxylic acids, and monomers represented by the above formula (2). Only one species of the monomers other than the monomer represented by the above formula (3) may be used, and two or more species of them may be used in combination.

The methacrylic acid esters are not especially limited as long as they are (meth)acrylic acid esters other than the monomer represented by the above formula (3). Examples thereof include acrylic acid esters such as methyl acrylate, ethyl acrylate, n-butyl acrylate, isobutyl acrylate, t-butyl acrylate, cyclohexyl acrylate, and benzyl acrylate; methacrylic acid esters such as methyl methacrylate, ethyl methacrylate, propyl methacrylate, n-butyl methacrylate, isobutyl methacrylate, t-butyl methacrylate, cyclohexyl methacrylate, and benzyl methacrylate. Only one or two or more species of them may be used in combination. Among these, methyl methacrylate is preferable because it has especially excellent heat resistance and transparency.

The content of the (meth)acrylic acid ester other than the monomer represented by the above formula (3) in the monomer component subjected to the polymerization step is preferably 10 to 95% by weight, and more preferably 10 to 90% by weight, and still more preferably 40 to 90% by weight in order to sufficiently exhibit the effects of the present invention.

The hydroxyl group-containing monomers are not especially limited as long as they are hydroxyl group-containing monomers other than the monomer represented by the above formula (3). Examples thereof include α-hydroxymethyl styrene, α-hydroxyethyl styrene, 2-hydroxyethyl acrylate, and 2-hydroxyethyl methacrylate. Only one or two or more species of them may be used.

The content of the hydroxyl group-containingmonomer other than the monomer represented by the above formula (3) in the monomer component subjected to the polymerization step is preferably 0 to 30% by weight, and more preferably 0 to 20% by weight, and still more preferably 0 to 15% by weight, and particularly preferably 0 to 10% by weight in order to sufficiently exhibit the effects of the present invention.

Examples of the unsaturated carboxylic acids include acrylic acid, methacrylic acid, crotonic acid, α-substituted acrylic acid, and α-substituted methacrylic acid. Only one or two or more species of them may be used in combination. Among these, acrylic acid and methacrylic acid are particularly preferable in order to sufficiently exhibit effects of the present invention.

The content of the unsaturated carboxylic acids in the monomer component subjected to the polymerization step is preferably 0 to 30% by weight, and more preferably 0 to 20% by weight, and still more preferably 0 to 15% by weight, and particularly preferably 0 to 10% by weight in order to sufficiently exhibit the effects of the present invention.

Examples of the monomers represented by the above formula (2) include styrene, vinyl toluene, α-methylstyrene, acrylonitrile, methyl vinyl ketone, ethylene, propylene, and vinyl acetate. Only one or two or more species of them may be used in combination. Among them, styrene and α-methylstyrene are particularly preferable in order to sufficiently exhibit the effects of the present invention.

The content of the monomers represented by the above formula (2) in the monomer component subjected to the polymerization step is preferably 0 to 30% by weight, and more preferably 0 to 20% by weight, and still more preferably 0 to 15% by weight, and particularly preferably 0 to 10% by weight in order to sufficiently exhibit the effects of the present invention.

The embodiment of the polymerization reaction in which the monomer component is polymerized to obtain a polymer including a hydroxyl group and an ester group in the molecular chain is preferably an embodiment in which the polymerization is performed using a solvent. A solution polymerization is particularly preferable.
The polymerization temperature and the polymerization time depend on the species, the ratio, and the like, of the used monomers. The polymerization temperature is 0 to 150°C, and the polymerization time is preferably 0.5 to 20 hours. More preferably, the polymerization temperature is 80 to 140°C and the polymerization time is 1 to 10 hours.

In the embodiment in which the polymerization is performed using a solvent, the polymerization solvent is not especially limited. Examples of the polymerization solvent include aromatic hydrocarbon solvents such as toluene, xylene, and ethylbenzene; ketone solvents such asmethyl ethyl ketone, methyl isobutyl ketone; ether solvents such as tetrahydrofuran. Only one or two or more species of them may be used in combination. If the used solvent has a too high boiling point, the residual volatile content in the finally obtained lactone ring-containing polymer increases. Therefore, it is preferable that the used solvent has a boiling point of 50 to 200°C.

A polymerization initiator may be added if necessary during the polymerization reaction. The polymerization initiator is not especially limited. Examples thereof include organic peroxides such as t-amylperoxy-2-ethylhexanoate, t-amylperoxyisononanoate, t-amylperoxyacetate, cumene hydroperoxide, diisopropylbenzene hydroperoxide, di-t-butyl peroxide, lauroyl peroxide, benzoyl peroxide, and t-butylperoxyisopropyl carbonate; and azo compounds such as 2,2'-azobis(isobutylonitrile), 1,1'-azobis(cyclohexanecarbonitrile), and 2,2'-azobis(2,4-dimethylvaleronitrile). Only one or two or more species of them may be used in combination. The use amount of the polymerization initiator is not especially limited and may be appropriately determined depending on the combination of the used monomers, the reaction conditions, and the like. A chain transfer agent may be used to control the molecular weight of the polymer. Examples of the chain transfer agent include alkyl mercaptans such as butyl mercaptan, octyl mercaptan, and dodecyl mercaptan; and α-styrene dimer.

It is preferable in the polymerization that the concentration of the produced polymer in the polymerization reaction mixture is controlled to 50% by weight or less in order to suppress gelling of the reaction liquid. Specifically, it is preferable that a polymerization solvent is appropriately added to the polymerization reaction mixture, thereby controlling the concentration of the produced polymer in the polymerization reaction mixture to 50% by weight or less, if the concentration is more than 50% by weight. The concentration of the produced polymer in the polymerization reaction mixture is more preferably 45% by weight or less and still more preferably 40% by weight or less. If the concentration of the polymer in the polymerization reaction mixture is too small, the productivity is reduced. Therefore, the concentration of the polymer in the polymerization reaction mixture is preferably 10% by weight or more and more preferably 20% by weight or more.

The way of appropriately adding the polymerization solvent into the polymerization reaction mixture is not especially limited. The polymerization solvent may be continuously or intermittently added. Thus, the concentration of the produced polymer in the polymerization reaction mixture is controlled, thereby more sufficiently suppressing gelling of the reaction liquid. Particularly, gelling can be sufficiently suppressed even if the content of the hydroxyl group and the ester group in the molecular chain is increased to increase the content of the lactone ring for improvement in heat resistance. The polymerization solvent to be added may be the same or different species from the solvent used in the initial charge of the polymerization reaction. It is preferable that a solvent in the same species as the solvent used in the initial charge of the polymerization reaction is used. Only one solvent or a mixture of two or more different solvents may be used as the added polymerization solvent.

The polymerization reaction mixture obtained after completion of the above-mentioned polymerization steps generally includes the solvent other than the obtained polymer. There is no need to obtain the polymer in a solid state by completely removing the solvent from the mixture. It is preferable that the mixture including the solvent is subjected to the following lactone cyclized condensation step. If necessary, the polymer is obtained in a solid state, and thereto, a solvent preferable for the following lactone cyclized condensation step is added again.

The polymer obtained in the polymerization step is the polymer (a) including a hydroxyl group and an ester group in the molecular chain. The polymer (a) has a weight average molecular weight of preferably 1000 to 300000, and more preferably 5000 to 250000, and still more preferably 10000 to 200000, and particularly preferably 50000 to 200000. The polymer (a) obtained in the polymerization step becomes a lactone ring-containing polymer by being subjected to heat treatment in the following lactone cyclized condensation step, thereby introducing a lactone ring structure thereinto.

The reaction for introducing the lactone ring structure into the polymer (a) is a reaction in which the hydroxyl group and the ester group in the molecular chain of the polymer (a) are condensed and cyclized by heating, thereby generating a lactone ring structure. The cyclized condensation generates an alcohol as a by-product. The lactone ring structure is formed in the molecular chain of the polymer (the main skeleton of the polymer), thereby providing high heat resistance with the polymer. If the reactivity of the cyclized condensation reaction in which the lactone ring structure is introduced is insufficient, the heat resistance might be insufficiently improved, or a heat treatment at the time of molding might generate a condensation reaction during the molding, or the produced alcohol might exist in the molded product as bubbles or silver streaks, which is not preferable.
The lactone ring-containing polymer obtained in the lactone cyclized condensation step preferably has a lactone ring structure represented by the above formula (1).

The method of the heat treatment for the polymer (a) is not especially limited. For example, publicly known methods may be used. The solvent-including polymerization reaction mixture, obtained in the polymerization step, may be subjected to heat treatment as it is. Alternatively, the mixture may be subjected to heat treatment in the presence of a solvent, if necessary, using a ring-closing catalyst. Further, the heat treatment may be performed using a heating furnace including a vacuum apparatus or a devolatilizing apparatus for removing volatile contents, extruders including a reaction apparatus or a devolatilizing apparatus, and the like.

Another thermoplastic resin may be coexistent with the polymer (a) when the cyclized condensation reaction is performed. Further, when the cyclized condensation reaction is performed, if necessary, commonly used esterification catalysts or transesterification catalysts such as p-toluene sulfonic acid may be used as a catalyst for the cyclized condensation reaction. Organic carboxylic acids such as acetic acid, propionic acid, benzoic acid, acrylic acid, and methacrylic acid may be used as the catalyst. Basic compounds, organic carboxylates, carbonates, and the like may be used. If basic compounds, organic carboxylates, carbonates, and the like, are used, they are used in the manner as disclosed in Japanese Kokai Publication Nos. Sho-61-254608 and Sho-61-261303.

It is preferable that an organic phosphorus compound is used as the catalyst when the cyclized condensation reaction is performed. If the organic phosphorus compound is used as the catalyst, it is used in the manner as disclosed in Japanese Kokai Publication No. 2001-151814. The use of the organic phosphorus compound as the catalyst can improve the cyclized condensation reactivity and further significantly reduce coloring of the obtained lactone ring-containing polymer. Further, the use of the organic phosphorus compound as the catalyst also can suppress reduction in the molecular weight, which might be caused when a devolatilization step mentioned below is performed in combination. As a result, an excellent mechanical strength can be provided for the polymer.

The amount of the catalyst used in the cyclized condensation reaction is not especially limited. The use amount is preferably 0.001 to 5% by weight, and more preferably 0.01 to 2.5% by weight, and still more preferably 0.01 to 1% by weight, and particularly preferably 0.05 to 0.5% by weight, relative to the polymer (a). If the use amount of the catalyst is less than 0.001% by weight, improvement in the cyclized condensation reactivity might not be sufficiently improved. If it is more than 5% by weight, coloring is generated or the polymer is cross-linked and becomes hard to melt or dilute, which is not preferable.
The time of addition of the catalyst is not especially limited. The catalyst may be added in the initial stage or the middle stage of the reaction, or may be added in the both stages.

It is preferable that the cyclized condensation reaction is performed in the presence of a solvent and a devolatilization step is performed together with the cyclized condensation reaction. In this case, an embodiment in which the devolatilization step is simultaneously performed during the whole cyclized condensation reaction and an embodiment in which the devolatilization step is performed partly simultaneously with the cyclized condensation reaction without simultaneously being performed during the whole cyclized condensation reaction may be mentioned. According to the method of simultaneously performing the devolatilization step, an alcohol that is a by-product in the cyclized condensation reaction is forcibly devolatilized to be removed. Therefore, the reaction equilibrium becomes advantageous to the generation side.

The above-mentioned devolatilization step means a step of removing the volatile contents such as the solvent and the residual monomer, and the alcohol that is a by-product in the cyclized condensation reaction in which the lactone ring structure is introduced, if necessary, under reduced pressure and heating conditions. If this removal treatment is insufficient, the produced resin contains much residual volatile contents. As a result, problems such as coloring caused by the alternation at the time of molding, molding defects such as bubbles and silver streaks, are generated.

If the devolatilization step is simultaneously performed during the whole cyclized condensation reaction, the used apparatus is not especially limited. In order to more effectively perform the present invention, a devolatilization apparatus including a heat exchanger and a devolatilization vessel, a vented extruder, and an apparatus including serially arranged the above-mentioned devolatilization apparatus and the above-mentioned extruder, are preferably used. A devolatilization apparatus including a heat exchanger and a devolatilization vessel or a vented extruder are more preferably used.
If the above-mentioned devolatilization apparatus including a heat exchanger and a devolatilization vessel is used, the reaction treatment temperature is preferably within a range of 150 to 350°C and more preferably within a range of 200 to 300°C. If the reaction treatment temperature is lower than 150°C, the cyclized condensation reaction is insufficient and the residual volatile contents might increase. If it is higher than 350°C, coloring or decomposition might be caused.

If the above-mentioned devolatilization apparatus including a heat exchanger and a devolatilization vessel is used, the reaction treatment pressure is preferably within a range of 931 to 1.33 hPa (700 to 1 mmHg) and more preferably within a range of 798 to 66.5 hPa (600 to 50 mmHg). If the above-mentioned pressure is lower than 931 hPa, the volatile contents including the alcohol tend to remain. If it is lower than 1.33 hPa, it becomes difficult to industrially perform the reaction.

If the above-mentioned vented extruder is used, the extruder may include one or two or more vents. It is preferable that the extruder includes two or more vents.
If the above-mentioned vented extruder is used, the reaction treatment temperature is preferably within a range of 150 to 350°C, and more preferably within a range of 200 to 300°C. If the above-mentioned temperature is lower than 150°C, the cyclized condensation reaction is insufficient, and the residual volatile contents might increase. If it is higher than 350°C, coloring or decomposition might be caused.

If the above-mentioned vented extruder is used, the reaction treatment temperature is preferably within a range of 931 to 1.33 hPa (700 to 1 mmHg) and more preferably within a range of 798 to 13.3 hPa (600 to 10mmHg). If the above-mentioned pressure is larger than 931 hPa, the volatile contents including the alcohol tend to remain. If it is lower than 1.33 hPa, it becomes difficult to industrially perform the reaction.

If the devolatilization step is simultaneously performed during the whole cyclized condensation reaction, physical characteristics of the obtained lactone ring-containing polymer might be deteriorated under severe heat treatment conditions, as mentioned below. Therefore, it is preferable that the above-mentioned catalyst for dealcoholization is used and the vented extruder and the like are used to perform the devolatilization step under moderate conditions as much as possible.
If the volatilization step is simultaneously performed during the whole cyclized condensation reaction, it is preferable that together with the solvent, the polymer (a) obtained in the polymerization step is introduced into a cyclized condensation reaction apparatus system. In this case, the mixture may be introduced into the above-mentioned reaction apparatus system such as a vented extruder and the like again, if necessary.
The embodiment in which the devolatilization step is performed partly simultaneously with the cyclized condensation reaction without simultaneously being performed during the whole cyclized condensation reaction may be employed. Examples of such an embodiment include an embodiment in which the apparatus used for producing the polymer (a) is further heated, and the cyclized condensation reaction is previously made to proceed, if necessary, while the devolatilization step is partly simultaneously performed, and then successively, the cyclized condensation reaction is performed simultaneously with the devolatilization step, and then the reaction is completed.

According to the above-mentioned embodiment in which the devolatilization step is simultaneously performed during the whole cyclized condensation reaction, for example, if the polymer (a) is heated at a temperature of near 250°C or a temperature of 250°C or higher with a twin-screw extruder, a difference in thermal history causes a part decomposition and the like before the cyclized condensation reaction is generated, which possibly deteriorates the physical properties of the obtained lactone ring-containing polymer. It is preferable that the cyclized condensation reaction is previously made proceed before the cyclized condensation reaction is simultaneously performed with the devolatilization stepbecause the latter reaction conditions can be relaxed and the deterioration of the physical properties of the obtained lactone ring-containingpolymer canbe suppressed. Examples of particularly preferable embodiments include an embodiment in which the devolatilization step is started some time later after the start of the cyclized condensation reaction, that is, an embodiment in which the reactivity of the cyclized condensation reaction in which the hydroxyl group and the ester group in the molecular chain of the polymer (a) obtained in the polymerization step are previously condensed and cyclized is increased to some extent, and successively, the cyclized condensation reaction is performed simultaneously with the devolatilization step. Specifically, an embodiment in which the cyclized condensation reaction is previously made to proceed until a specific reactivity in the presence of a solvent using a kettle reactor, and then the cyclized condensation reaction is completed using a devolatilization apparatus-including reactor such as a devolatilization apparatus including a heat exchanger and a devolatilization vessel, and a vented extruder, may be mentioned. Particularly in this embodiment, it is more preferable that the catalyst for the cyclized condensation reaction exists.

As mentioned above, the preferable embodiments for obtaining the lactone ring-containing polymer in the present invention include the method of: previously performing the cyclized condensation reaction of the hydroxyl group with the ester group in the molecular chain of the polymer (a) obtained in the polymerization step, thereby increasing the cyclized condensation reactivity to some extent; and successively performing the cyclized condensation reaction simultaneously with the devolatilization step. According to this embodiment, a lactone ring-containing polymer that has a higher glass transition temperature, a higher cyclized condensation reactivity, and excellent heat resistance can be obtained.

The reactor that can be used for the cyclized condensation reaction previously performed before the cyclized condensation reaction is performed simultaneously with the devolatilization step is not especially limited. Preferable examples of the reactor include an autoclave, a kettle reactor, and a devolatilization apparatus including a heat exchanger and a devolatilization vessel. Further, a vented extruder preferable for the cyclized condensation reaction simultaneously performed with the devolatilization step can be used. An autoclave and a kettle reactor are more preferable. However, even if a reactor such as a vented extruder is used, the cyclized condensation reaction can be performed in the same state as in the reaction using an autoclave or a kettle reactor, by performing the reaction under moderate vent conditions, or not operating the vent, or adjusting a temperature condition, a barrel condition, a screw shape, a screw-driving condition, and the like.

In the cyclized condensation reaction previously performed before the cyclized condensation reaction is performed simultaneously with the devolatilization step, a method (i) of subjecting a mixture including the polymer (a) and the solvent, obtained in the polymerization step, to heat reaction, in the presence of a catalyst, a method (ii) of subjecting the mixture to heat reaction in the absence of a catalyst, and a method of performing the above-mentioned method (i) or (ii) under pressurization are mentioned as a preferable method.
The "mixture including the polymer (a) and the solvent" that is introduced into the cyclized condensation reaction in the lactone cyclized condensation step means that the polymerization reaction mixture obtained in the polymerization step may be used as it is, or the solvent is once removed from the mixture and then a solvent suitable for the cyclized condensation reaction may be added again.

The solvent that can be added again when the cyclized condensation reaction is previously performed before the cyclized condensation reaction is simultaneously performed with the devolatilization step is not especially limited. Examples thereof include aromatic hydrocarbons such as toluene, xylene, and ethyl benzene; ketones such as methyl ethyl ketone and methyl isobutyl ketone; chloroform, DMSO (dimethyl sulfoxide), and tetrahydrofuran. A solvent in the same species as the solvent that can be used in the polymerization step is preferable.

Commonly used esterification catalysts or transesterification catalysts such as p-toluene sulfonic acid, basic compounds, organic carboxylates, carbonates, and the like are mentioned as the catalyst that is added in the above-mentioned method (i). The above-mentioned organic phosphorus compounds are preferably used in the present invention.
The time of addition of the catalyst is not especially limited. The catalyst may be added in the initial stage or the middle stage of the reaction, or may be added in the both stages. The amount of the added catalyst is not especially limited. The amount is preferably 0.001 to 5% by weight, and more preferably 0.01 to 2.5% by weight, and still more preferably 0.01 to 1% by weight, and particularly preferably 0.05 to 0.5% by weight, relative to the weight of the polymer (a).

The heating temperature and the heating time in the above-mentioned method (i) are not especially limited. The heating temperature is preferably higher than a room temperature, and more preferably 50°C or more. The heating time is preferably 1 to 20 hours, and more preferably 2 to 10 hours. If the heating temperature is low or the heating time is short, the cyclized condensation reactivity is reduced, which is not preferable. If the heating time is too long, coloring or decomposition of the resin might be caused, which is not preferable.

A method of heating the polymerization reaction mixture obtained in the polymerization step as it is using a pressure-resistant kettle and the like may be mentioned as the above-mentioned method (ii). The heating temperature is preferably 100°C or more and more preferably 150°C or more. The heating time is preferably 1 to 20 hours and more preferably 2 to 10 hours. If the heating temperature is low or the heating time is short, the cyclized condensation reactivity is reduced, which is not preferable. If the heating time is too long, coloring or decomposition of the resin might be caused, which is not preferable.

Both of the above-mentioned methods (i) and (ii) may be performed under pressure, depending on conditions. Part of the solvent may be naturally volatilized when the cyclized condensation reaction is previously performed before the cyclized condensation reaction which is simultaneously performed with the devolatilization step.

After completion of the cyclized condensation reaction which is previously performed before the cyclized condensation reaction is simultaneously performed with the devolatilization step, that is, before initiation of the devolatilization step, the weight reduction rate at 150 to 300°C according to dynamic TG measurement is preferably 2% or less, and more preferably 1.5% or less, and still more preferably 1% or less. If the weight reduction rate is higher than 2%, the cyclized condensation reactivity is not increased to a sufficient level even if the cyclized condensation reaction is successively performed simultaneously with the devolatilization step. Therefore, the physical characteristics of the obtained lactone ring-containing polymer might be reduced. In the above-mentioned cyclized condensation reaction, another thermoplastic resin may be coexistent with the polymer (a).

In the embodiment in which the cyclized condensation reactivity is increased to some extent by previously performing the cyclized condensation reaction of the hydroxyl group with the ester group in the molecular chain of the polymer (a) obtained in the polymerization step and successively the cyclized condensation reaction is simultaneously performed with the devolatilization step, the polymer obtained in the previously performed cyclized condensation reaction (the polymer obtained by the cyclized condensation of at least some hydroxyl groups and ester groups in the molecular chain) and the solvent may be introduced, as they are, into the cyclized condensation reaction performed simultaneously with the devolatilization step. Alternatively, if necessary, the above-mentioned polymer (the polymer obtained by the cyclized condensation of at least some hydroxyl groups and ester groups in the molecular chain) is isolated and subjected to another treatment such as readdition of a solvent, and then introduced into the cyclized condensation reaction performed simultaneously with the devolatilization step.
The devolatilization step and the cyclized condensation reaction are not necessarily finished at the same time. The devolatilization step may be finished some time later after completion of the cyclized condensation reaction.

The lactone ring-containing polymer has a weight reduction rate at 150 to 300°C according to dynamic TG measurement of 1% by weight or less, and more preferably 0.5% by weight or more, and still more preferably 0.3% by weight or less.
The lactone ring-containing polymer has a high cyclized condensation reactivity, and therefore, defects such as incorporation of bubbles or silver streaks into molded products of the resin can be suppressed. Further, the lactone ring structure is sufficiently introduced into the polymer because of the high cyclized condensation reactivity. Therefore, the obtained lactone ring-containing polymer has a sufficiently high heat resistance.

The amorphous thermoplastic resin of the present invention may be a maleimide polymer. The maleimide polymer may be a homopolymer of N-substituted maleimide, or may be a copolymer of N-substituted maleimide with a polymerizable monomer copolymerizable with the N-substituted maleimide.
Specific examples of the above-mentioned N-substituted maleimide include N-cyclohexylmaleimide, N-phenylmaleimide, N-methylmaleimide, N-ethylmaleimide, N-isopropylmaleimide, N-t-butylmaleimide, and N-benzylmaleimide. Among the N-substituted maleimides, N-phenylmaleimide and N-cyclohexylmaleimide are particularly preferable in view of heat resistance, transparency, and low coloration. Only one species or two or more species of these N-substituted maleimide may be used in combination.
The content of the N-substituted maleimide is preferably 15 to 50% by weight. If the content of the N-substituted maleimide is 15% by weight or less, the heat resistance is low, which is not preferable. In contrast, if the content is more than 50% by weight, the transparency is reduced, which is not preferable.

The above-mentioned polymerizable monomer copolymerizable with the N-substituted maleimide is an unsaturated bond-containing compound copolymerizable with the N-substituted maleimide. Examples thereof include below-mentioned methacrylic acid esters, and below-mentioned other monomers copolymerizable with the N-substituted maleimide and the methacrylic acid esters (hereinafter, also referred to other monomers). One or two or more species of them may be used. Methacrylic acid esters are preferably used as the copolymerizable monomer in order to obtain a heat-resistant resin with high transparency. It is more preferable that a methacrylic acid ester and an aromatic vinyl or an acrylic acid ester are used in combination. Further, it is preferable that the copolymerizable monomer includes a methacrylic acid ester as a main component.

Specific examples of the above-mentioned methacrylic acid esters include methyl methacrylate, ethyl methacrylate, n-butyl methacrylate, isobutyl methacrylate, t-butyl methacrylate, cyclohexyl methacrylate, and benzyl methacrylate. Among these, methyl methacrylate is particularly preferable. Only one or two or more species of these methacrylic acid esters may be used.

The content of the methacrylic acid esters is preferably 50 to 85% by weight. If the content of the methacrylic acid esters is less than 50% by weight, the excellent characteristics typified by transparency and the like of the methacrylic resins might be reduced. If the content of the methacrylic acid esters is more than 85% by weight, the heat resistance might be reduced.

Examples of the polymerizable monomer copolymerizable with the N-substitutedmaleimide, other than the above-mentioned methacrylic acid esters, include: aromatic vinyls; unsaturated nitriles; acrylic acid esters; olefines; dienes; vinyl ethers; vinyl esters; fluorinated vinyls; allyl esters or methacrylic esters of saturated aliphatic monocarboxylic acids, such as allyl propionate; poly(meth)acrylates; polyallylates; glycidyl compounds; and unsaturated carboxylic acids. Among these, aromatic vinyls are particularly preferable.

Examples of the above-mentioned aromatic vinyls include styrene, α-methyl styrene, paramethyl styrene, isopropyl styrene, vinyl toluene, and chlorstyrene. Among these, styrene is particularly preferable.
Examples of the above-mentioned unsaturated nitriles include acrylonitrile, methacrylonitrile, ethacrylonitrile, and phenylacrylonitrile.
Preferable examples of the above-mentioned acrylic acid esters include acrylic acid esters containing at least one selected from the group consisting of alkyl groups containing 1 to 18 carbon atoms, cyclohexyl groups, and benzyl groups.

Specific examples of the above-mentioned acrylic acid esters include methyl acrylate, ethyl acrylate, isopropyl acrylate, butyl acrylate, 2-ethylhexyl acrylate, cyclohexyl acrylate, benzyl acrylate, and 2-hydroxylethyl acrylate.

Examples of the above-mentioned olefines include ethylene, propylene, isobutylene, and diisobutylene. Examples of the above-mentioned dienes include butadiene and isoprene. Examples of the above-mentioned vinyl ethers include methyl vinyl ether, ethyl vinyl ether, and butyl vinyl ether. Examples of the above-mentioned vinyl esters include vinyl acetate and vinyl propionate. Examples of the above-mentioned vinyl fluorides include vinylidene fluoride.

Examples of the above-mentioned poly(meth)acrylates include ethylene glycol di(meth)acrylate, diethylene glycol (meth) acrylate, and trimethylol propane tri (meth) acrylate.
Triallylisocyanurate and the like may be mentioned as the above-mentioned polyallylates. Glycidyl(meth)acrylate and the like may be mentioned as the above-mentioned glycidyl compounds. Examples of the above-mentioned unsaturated carboxylic acids include acrylic acid, methacrylic acid, itaconic acid, maleic acid, fumaric acid, or half-esterified products or anhydrides thereof. Only one or two or more species of these compounds mentioned as other monomers may be used in combination.

The content of the other monomers is preferably 0 to 20% by weight. If the content of the other monomers is more than 20% by weight, the transparency and the heat resistance of the obtained amorphous thermoplastic resin might be reduced.
In the embodiment of the polymerization reaction in which the monomer component is polymerized to produce a maleimide polymer, solution polymerization, bulk polymerization, suspension polymerization, emulsion polymerization, and the like may be used. An embodiment in which the polymerization is performed using a solvent is preferable, and solution polymerization is particularly preferable.

The polymerization temperature and the polymerization time depend on the species, the ratio, and the like, of the used monomers. The polymerization temperature is 0 to 150°C, and the polymerization time is preferably 0.5 to 20 hours. More preferably, the polymerization temperature is 80 to 140°C and the polymerization time is 1 to 10 hours.

in the embodiment in which the polymerization is performed using a solvent, the polymerization solvent is not especially limited. Examples of the polymerization solvent include aromatic hydrocarbon solvents such as toluene, xylene, and ethylbenzene; ketone solvents such as methyl ethyl ketone, methyl isobutyl ketone; ether solvents such as tetrahydrofuran. Only one or two or more species of them may be used in combination. If the used solvent has a too high boiling point, the residual volatile content in the finally obtained lactone ring-containing polymer increases. Therefore, it is preferable that the used solvent has a boiling point of 50 to 200°C.

A polymerization initiator may be added if necessary during the polymerization reaction. The polymerization initiator is not especially limited. Examples thereof include organic peroxides such as t-amylperoxy-2-ethylhexanoate, t-amylperoxyisononanoate, t-amylperoxyacetate, cumene hydroperoxide, diisopropylbenzene hydroperoxide, di-t-butyl peroxide, lauroyl peroxide, benzoyl peroxide, and t-butylperoxyisopropyl carbonate; and azo compounds such as 2,2'-azobis(isobutylonitrile), 1,1'-azobis(cyclohexanecarbonitrile), and 2,2'-azobis(2,4-dimethylvaleronitrile). Only one or two or more species of them may be used in combination. The use amount of the polymerization initiator is not especially limited and may be appropriately determined depending on the combination of the used monomers, the reaction conditions, and the like.
A chain transfer agent may be used to control the molecular weight of the polymer. Examples of the chain transfer agent include alkyl mercaptans such as butyl mercaptan, octyl mercaptan, and dodecyl mercaptan; and α-styrene dimer.

It is preferable in the polymerization that the concentration of the produced polymer in the polymerization reaction mixture is controlled to 50% by weight or less in order to suppress gelling of the reaction liquid. Specifically, it is preferable that a polymerization solvent is appropriately added to the polymerization reaction mixture, thereby controlling the concentration of the produced polymer in the polymerization reaction mixture to 50% by weight or less, if the concentration is more than 50% by weight. The concentration of the produced polymer in the polymerization reaction mixture is more preferably 45% by weight or less and still more preferably 40% by weight or less. If the concentration of the polymer in the polymerization reaction mixture is too small, the productivity is reduced. Therefore, the concentration of the polymer in the polymerization reaction mixture is preferably 10% by weight or more and more preferably 20% by weight or more.

The way of appropriately adding the polymerization solvent into the polymerization reaction mixture is not especially limited. The polymerization solvent may be continuously or intermittently added. Thus, the concentration of the produced polymer in the polymerization reaction mixture is controlled, thereby more sufficiently suppressing gelling of the reaction liquid. The polymerization solvent to be added may be the same or different species from the solvent used in the initial charge of the polymerization reaction. It is preferable that the solvent in the same species as the solvent used in the initial charge of the polymerization reaction is used. Only one solvent or a mixture of two or more different solvents may be used as the added polymerization solvent.

The maleimide polymer obtained in the polymerization step has a weight average molecular weight of preferably 1000 to 300000, and more preferably 5000 to 2500000, and still more preferably 10000 to 200000, and particularly preferably 50000 to 200000.
It is preferable that unreacted monomers or volatile components such as a solvent are removed from the above-mentioned polymerization liquid. It is preferable that the volatile components are evaporated to be removed by a vacuum flash method, a thin film evaporation method, a heating and devolatilization method using an extruder with a single or twin vent.

If the volatile components are removed, the used apparatus is not especially limited. In order to more effectively provide the present invention, a devolatilization apparatus including a heat exchanger and a devolatilization vessel, a vented extruder, and an apparatus including serially arranged the above-mentioned devolatilization apparatus and the above-mentioned extruder, are preferably used. A devolatilization apparatus including a heat exchanger and a devolatilization vessel or a vented extruder are more preferably used.

If the above-mentioned devolatilization apparatus including a heat exchanger and a devolatilization vessel is used, the reaction treatment temperature is preferably within a range of 150 to 350°C and more preferably within a range of 200 to 300°C. If the reaction treatment temperature is lower than 150°C, the residual volatile contents might increase. If it is higher than 350°C, coloring or decomposition might be caused.

If the above-mentioned devolatilization apparatus including a heat exchanger and a devolatilization vessel is used, the reaction treatment pressure is preferably within 931 to 1.33 hPa (700 to 1 mmHg) and more preferably within 798 to 66.5 hPa (600 to 50 mmHg). If the above-mentioned pressure is larger than 931 hPa, the volatile contents tend to remain. If it is lower than 1.33 hPa, it becomes difficult to industrially perform the reaction.

If the above-mentioned vented extruder is used, the extruder may include one or two or more vents. It is preferable that the extruder includes two or more vents.
If the above-mentioned vented extruder is used, the reaction temperature is preferably within a range of 150 to 350°C, and more preferably within a range of 200 to 300°C. If the above-mentioned temperature is lower than 150°C, the cyclized condensation reaction is insufficient, and the residual volatile contents might increase. If it is higher than 350°C, coloring or decomposition might be caused.

If the above-mentioned vented extruder is used, the reaction treatment temperature is preferably within a range of 931 to 1.33 hPa (700 to 1 mmHg) and more preferably within a range of 798 to 13.3 hPa (600 to 10mmHg). If the above-mentioned pressure is larger than 931 hPa, the volatile contents including the alcohol tend to remain. If it is lower than 1.33 hPa, it becomes difficult to industrially perform the reaction.

### "Other amorphous thermoplastic resin"

The amorphous thermoplastic resin of the present invention may contain other amorphous thermoplastic resins other than the lactone ring-containing polymer or the maleimide polymer. The species of the amorphous thermoplastic resins is not especially limited as long as a mixture of such resins with the lactone ring-containing polymer or the maleimide polymer has a glass transition temperature of 120°C or more and a 1% by weight chloroform solution of the mixture has a light transmittance of 80% or more at 500 nm and a light transmittance of 30% or less at 380 nm. Amorphous thermoplastic resins that are thermodynamically compatible with the lactone ring-containing polymer or the maleimide polymer are preferable in view of improvement in transparency and mechanical strength.
The content ratio of the lactone ring-containing polymer or the maleimide polymer to the other amorphous thermoplastic resins in the amorphous thermoplastic resin of the present invention is preferably 60 to 99: 1 to 40% by weight, and more preferably 70 to 97 : 3 to 30% by weight, and still more preferably 80 to 95: 5 to 20% by weight. If the content of the lactone ring-containing polymer or the maleimide polymer in the amorphous thermoplastic resin is less than 60% by weight, the effects of the present invention might be insufficiently exhibited.

Examples of the other amorphous thermoplastic resins of the present invention include: olefin polymers such as polyethylene, polypropylene, an ethylene-propylene copolymer, poly(4-methyl-1-pentene); halogen-containing polymers such as vinyl chloride and chlorinated vinyl resin; acrylic polymers such as methyl polymethacrylate; styrene polymers such as polystyrene, a styrene-methyl methacrylate copolymer, styrene-acrylonitrile copolymer, and an acrylonitrile-butadiene-styrene block copolymer; polyesters such as polyethylene terephthalate, polybutylene terephthalate, and polyethylene naphthalate; polyamides such as nylon 6, nylon 66, and nylon 610; polyacetal; polycarbonate; polyphenylene oxide; polyphenylene sulfide; polyetheretherketone; polysulfone; polyether sulfone; polyoxybenzylene; polyamidoimide; and rubber polymers such as ABS resin and ASA resin including a polybutadiene rubber or an acrylic rubber. It is preferable that the rubber polymers have a graft part with a composition compatible with the lactone ring-containing polymer or the maleimide polymer of the present invention on the surface. It is also preferable that the average particle diameter of the rubber polymer is 100 nm or less, and more preferably 70 nm or less in view of improvement in transparency of an extruded film.

As the amorphous thermoplastic resins thermodynamically compatible with the lactone ring-containing polymer or the maleimide polymer, a copolymer including a cyanated vinyl monomer unit and an aromatic vinyl monomer unit, specifically, an acrylonitrile-styrene copolymer, a polyvinyl chloride resin, or a polymer including 50% by weight or more of a methacrylic ester may be used. Among these, it an acrylonitrile-styrene copolymer is used, a polymer having a glass transition temperature of 120°C or more and a light transmittance of 80% or more at 500 nm and a light transmittance of 30% or less at 380 nm in the form of a 1% by weight chloroform solution. Whether or not the lactone ring-containing polymer and other amorphous thermoplastic resins are thermodynamically compatible with each other can be identified by measuring the glass transition point of the amorphous thermoplastic resin composition obtained by mixing the polymer with the resins. Specifically, it can be said that they are compatible with each other if only one glass transition point of the mixture of the lactone ring-containing polymer and the other amorphous thermoplastic resin is observed according to the measurement using a differential scanning calorimetry.
If an acrylonitrile-styrene copolymer is used as another amorphous thermoplastic resin, emulsion polymerization method, suspension polymerization method, solution polymerization, bulk polymerization, and the like, can be used for producing the polymer. It is preferable that the polymer is produced by solution polymerization or bulk polymerization in view of transparency or optical performances of the obtained optical film.

The amorphous thermoplastic resin composition of the present invention may contain other additives. Examples of the other additives include: antioxidants such as hindered phenol, phosphorus, or sulfur; stabilizers such as light stabilizer, weathering stabilizer, and thermal stabilizer; reinforcers such as glass fiber and carbon fiber; near-infrared absorbers; flame retarders such as tris(dibromopropyl)phosphate, triallylphosphate, and antimony oxide; antistatic agents such as anionic, cationic, or nonionic surfactants; coloring agents such as an inorganic pigment, an organic pigment, and a dye; organic fillers and inorganic fillers; resin modifiers; organic fillers and inorganic fillers; plasticizers; lubricants; antistatic agents; and flame retarders. The content of the other additives in the amorphous thermoplastic resin molded product is preferably 0 to 5% by weight, and more preferably 0 to 2% by weight, and still more preferably 0 to 0.5% by weight.

### "Application and molding of amorphous thermoplastic resin"

The amorphous thermoplastic resin of the present invention is excellent in transparency and heat resistance, and also has characteristics such as low coloration, mechanical strength, and molding processability. Further, the resin has a UV-absorbing property, and therefore it is useful as an extruded film or sheet. That is, the preferable embodiments of the amorphous thermoplastic resin of the present invention include an extruded film or sheet made of the amorphous thermoplastic resin.
A method of forming an extruded film from the amorphous thermoplastic resin of the present invention is mentioned below in more detail as an example of the preferable application.

### "Extruded film"

The method of producing an extruded film from the amorphous thermoplastic resin of the present invention is not especially limited. For example, the amorphous thermoplastic resin having a glass transition temperature of 120°C or more, and the other thermoplastic resins, the other additives, and the like, are mixed with each other by a commonly known mixing method to previously produce an amorphous thermoplastic rein component. Then, an extruded film can be produced from the resin component. As this production method of the amorphous thermoplastic resin composition, for example, a method of extruding and kneading a mixture obtained by previously mixing the resin and the other thermoplastic resins or the other additives in a mixing apparatus such as an omni mixer may be adopted. In this case, the kneading machine used for the extruding and kneading is not especially limited. Commonly known kneaders, for example, extruders such as a single-screw extruder and a twin-screw extruder, and pressurized kneaders may be used.

A T-die method and an inflation, method and the like may be mentioned as a melt extrusion method. The temperature at which the extruded film is molded by such a method is preferably 150 to 350°C and more preferably 200 to 300°C.
If the extruded film is molded by the above-mentioned T-die method, a T-die is provided with the edge of a commonly used single-screw extruder or a twin-screw extruder. Then, the resin is extruded into a film, thereby obtaining a wind-up roll film. In this case, the film is stretched in the extrusion direction while the temperature of the wind-up roll is appropriately adjusted, thereby capable of producing the wind-up roll film through a uniaxial stretch step. If a step of stretching the film in the direction vertical to the extrusion direction is additionally performed, steps such as a sequential biaxial stretch and simultaneous biaxial stretch can be added.

The extruded film of the present invention may be unstretched or stretched film. If the film is stretched, the film may be a unaxially or biaxially stretched film. If the film is a biaxially stretched film, the film is simultaneously biaxially stretched or sequentially biaxially stretched. If the film is biaxially stretched, the mechanical strength is improved and thereby the film performances are improved. The optical film of the present invention includes the other amorphous thermoplastic resins, and therefore an increase in phase difference can be suppressed even if the film is stretched.
Therefore, the film can maintain optical isotropy.

With respect to the stretch temperature, it is preferable that the stretch is performed at a temperature near the glass transition temperature of the thermoplastic resin composition that is a raw material of the extruded film. Specifically, the stretch is preferably performed at a temperature lower than the glass transition temperature by 30°C to a temperature higher than the glass transition temperature by 100°C, and more preferably at a temperature lower than the glass transition temperature by 2C°C to a temperature higher than the glass transition temperature by 80°C. If the stretch temperature is lower than the glass transition temperature by 30°C, a sufficient stretch ratio is not obtained, which is not preferable. If the stretch temperature is higher than the glass transition temperature by 100°C, the resin flows and therefore the stretch can not be stably performed, which is not preferable.
The stretch ratio defined based on the area ratio is preferably within a range of 1.1 to 25 times, and more preferably within a range of 1. 3 to 10 times. If the stretch ratio is smaller than 1.1 times, improvement in toughness, attributed to the stretch, is not expected, which is not pref erable. If the stretch ratio is larger than 25 times, an effect enough to increase the stretch ratio is not observed.

The stretch rate (in one direction) is preferably 10 to 20000%/min, and more preferably 100 to 10000%/min. If the stretch rate is lower than 10%/min, it takes long time to reach a sufficient stretch ratio and thereby the production costs are increased, which is not preferable. If the stretch rate is higher than 20000%/min, breakdown of the stretched and extruded film, and the like, might be caused, which is not preferable. In order to stabilize the optical isotropy or the mechanical characteristics of the extruded film, the film after the stretch treatment may be subjected to heat treatment (annealing).

### EFFECT OF THE INVENTION

The amorphous thermoplastic resin of the present invention has the above-mentioned configuration. The present invention has an object to provide an amorphous thermoplastic resin having high transparency and high heat resistance and a UV-absorbing ability.

### BEST MODES FOR CARRYING OUT THE INVENTION

The present invention is mentioned in more detail below with reference to Examples and Comparative Examples, but the present invention is not especially limited to these Examples. Hereinafter, the term "part(s) by weight" is abbreviated as "part(s)" and the term "liter" is abbreviated as "L" for convenience.

### "Weight average molecular weight"

The weight average molecular weight of the polymer is measured on the polystyrene equivalent basis according to GPC (GPC system, product of TOSHO Corp.). Chloroform was used as a developing liquid.

### "Thermal analysis of resin"

With respect to the thermal analysis of the resin, about 10 mg of a sample was used under the conditions of a temperature increase rate of 10°C/min and a nitrogen flow of 50 cc/min using a DSC (product of Rigaku Corp., device name: DSC-8230). The glass transition temperature (Tg) is measured by a midpoint method in accordance with ASTM-D-3418.

### "Measurement of volatile contents in resin"

The amount of the residual volatile content in the resin was measured using a gas chromatography (product of Shimadzu Corp., device name: GC14A).

### "Yellow index (YI) of resin"

With respect to the measurement of the yellow index (YI) of the resin, a 15% by weight chloroform solution of the resin was charged into a quartz cell and measured for light transmittance in accordance with JIS-K-7103 using a color difference meter (Nippon Denshoku Industries, Co., Ltd., device name: SZ-Σ90).

### "Light transmittance"

With respect to the measurement of the light transmittance of the resin, a 1% by weight chloroform solution of the resin was charged into a quartz cell and measure for light transmittance us ing a spectrophotometer (Shimazu Corp., device name: UV-3100). With respect to the light transmittance measurement for the extruded film, the extruded film was used as it is for the measurement.

### "Evaluation method of resistance to thermal decomposition"

The resin 1 g was charged into a test tube. Then, the test tube was put into a heat block heated at 260°C (product of SCINICS Corp., DRY-BLOCK-Bath). The test tube was maintained as it is for 30 minutes and then taken out of the heat block. Then, the resin in the test tube was observed by eyes for decomposition and foaming state. The resin was evaluated based on the following observation standard.
Bad: Coloring and foaming were remarkably observed. The rise in bubble face level, caused by the foaming, was remarkably observed.
Average: Coloring and foaming were observed. The rise in bubble face level, caused by the foaming, was observed.
Good: No coloring and foaming were observed or slightly observed.

### Example 1

Into a 30L-reaction kettle equipped with a stirrer, a temperature sensor, a reflux condenser, and a nitrogen inlet tube, 37.5 parts of methyl methacrylate (MMA), 10 parts of methyl 2-(hydroxymethyl)acrylate (MHMA), 2.5 parts of 2-[2'-hydroxy-5'-methacryloyloxy]ethylphenyl]-2H-benzotriaz ole (product of OTSUKA PHARMACEUTICAL CO., LTD., trade name: RUVA-93), and 50 parts of toluene were charged. While nitrogen was made to pass therethrough, the temperature was raised at 105°C to perform reflux. Then, 0.05 parts of t-amylperoxyisononanoate (Atofina Yoshitomi, Ltd., trade name: Lupasol 570) was added as an initiator, and simultaneously 0.10 parts of t-amylperoxyisononanoate were added dropwise for 2 hours. Under reflux (at about 105 to 110°C), solution polymerization was performed and further the reactant was matured for 4 hours.

To the obtained polymer solution, 0.05 parts of a mixture of stearylphosphate and distearylphosphate (product of SAKAI CHEMICAL INDUSTRY CO., LTD., trade name: Phoslex A-18) was added. Under reflux (at about 90 to 110°C), the mixture was subjected to cycli zed condensation reaction for 5 hours. Then, the polymer solution obtained in the above-mentioned cyclized condensation reaction was introduced into a vent type twin screw extruder including one rear vent and four fore vents (φ=29.75 mm, L/D=30) at a extruded amount of 2.0 kg/h as the resin. The barrel temperature was 260°C, the rotation speed was 100 rpm, and the decompression degree was 13.3 to 400 hPa (10 to 300 mmHg). Then, the cyclized condensation reaction and the devolatilization were performed inside this extruder. As a result, the resin was extruded to obtain a transparent pellet (1A). Table 1 shows the analysis results of the obtained pellet (1A).

The obtained pellet (1A) was melt and extruded from a coat hanger type T-die with a width of 150 mm using a twin-screw extruder having a 20 mmφ screw. As a result, an extruded film with a thickness of about 100 µm (1B) was prepared.
The extruded film (1B) and an extruded film (1C) obtained by subjecting the extruded film (1B) to furnace heating at 80°C for 24 hours were measured for light transmittances at 500 nm and 380 nm. Table 1 shows the results.

### Example 2

A transparent pellet (2A) was obtained by performing an experiment in the same manner as in Example 1, except that 35 parts of methyl methacrylate (MMA), 10 parts of methyl 2-(hydroxymethyl)acrylate (MHMA), 2.5 parts of 2-[2'-hydroxy-5'-methacryloyloxy]ethyl phenyl]-2H-benzotriazole (product of OTSUKA PHARMACEUTICAL CO., LTD., trade name: RUVA-93), and 2.5 parts of styrene were charged. Table 1 shows the analysis results of the obtained pellet (2A).

### Example 3

The pellet (1A) obtained in Example 1 and an acrylonitrile-styrene copolymer (AS resin) were kneaded at a weight ratio of the pellet (1A)/the copolymer of 90/10 using a single-screw extruder (φ=30 mm). As a result, the resin was extruded to obtain a transparent pellet (3A). Table 1 shows the analysis results of the obtained pellet (3A).

### Example 4

Into a 30 L-reaction kettle equipped with a stirrer, a temperature sensor, a reflux condenser, a nitrogen inlet tube, 13.25 parts of methyl methacrylate (MMA), 6.25 parts of N-cyclohexyl maleimide (CHMI), 2.5 parts of 2-[2'-hydroxy-5'-methacryloyloxy]ethylphenyl]-2H-benzotriaz ole (product of OTSUKA PHARMACEUTICAL, CO., LTD., tradename: RUVA-93), and 25 parts of toluene were charged. While nitrogen was made to pass therethrough, the temperature was raised at 100°C to perform reflux. Then, 0.015 parts of t-butylperoxyisopropyl carbonate (product of KAYAKU AKZO CO., LTD., tradename: Kayacarbon BIC-75) was added as an initiator.
Then, a mixture of 15.75 parts of methyl methacrylate, 6.25 parts of N-cyclohexyl maleimide, 6 parts of styrene, 25 parts of toluene, and 0.081 parts of t-butylperoxyisopropyl carbonate was previously bubbled with nitrogen gas and added dropwise to the above-mentioned reaction vessel for 3.5 hours. Under reflux (at about 110°C), the mixture was subjected to solution polymerization and further, the reactant was matured for 3.5 hours.
This polymerization solution was supplied to the twin-screw extruder mentioned in Example 1, in which the barrel temperature was control led at 240°C, and vacuum de volatilization was performed through a vent opening. Then, the extruded strand was pelletized to produce a transparent pellet (4A). Table 1 shows the analysis results of the obtained pellet (4A).

### Comparative Example 1

Into a 30L-reaction kettle equipped with a stirrer, a temperature sensor, a reflux condenser, and a nitrogen inlet tube, 40 parts of methyl methacrylate (MMA), 10 parts of methyl 2-(hydroxylmethyl)acrylate (MHMA), 50 parts of toluene were charged. While nitrogen was made to pass therethrough, the temperature was raised at 105°C to perform reflux. Then, 0.05 parts of t-amylperoxyisononanoate (Atofina Yoshitomi, Ltd., trade name: Lupasol 570) was added as an initiator, and simultaneously 0.10 parts of t-amylperoxyisononanoate were added dropwise for 2 hours. Under reflux (at about 105 to 110°C), solution polymerization was performed and further the reactant was matured for 4 hours.
To the obtained polymer solution, 0.05 parts of a mixture of stearylphosphate with distearylphosphate (product of SAKAI CHEMICAL INDUSTRY CO., LTD., trade name: PhoslexA-18) was added. Under reflux (at about 90 to 110°C), the mixture was subjected to cyclized condensation reaction for 5 hours. Then, the polymer solution obtained in the above-mentioned cyclized condensation reaction, 2.5 parts of 2-(5-methyl-2-hydroxypenyl)benzotriazole (product of Chiba, Speciality Chemicals Inc., trade name: Tinubin P) was added and the mixture was sufficiently stirred. The mixture was introduced into a vent type twin screw extruder including one rear vent and four fore vents (φ=29.75 mm, L/D=30) at a extruded amount of 2.0 kg/h as the resin. The barrel temperature was 260°C, the rotation speed was 100 rpm, and the decompression degree was 13.3 to 400 hPa (10 to 300 mmHg). Then, the cyclized condensation reaction and the devolatilization were performed inside this extruder. As a result, the resin was extruded to obtain a transparent pellet (5A). Table 1 shows the analysis results of the obtained pellet (5A).

The obtained pellet (5A) was extruded under the same conditions as in Example 1, thereby preparing an extruded film (5B) with a thickness of 100 µm.
The obtained extruded film (5B) and an extruded film (5C) obtained by subjecting this extruded film (5B) to furnace heating at 80°C for 24 hours were measured for light transmittances at 500 nm and 380 nm. Table 1 shows the results.

### Examples 5 to 9

Pellets (6A to 10A) having compositions shown in Table 1, respectively, extruded films, and extruded films after heating, were produced and evaluated. Table 1 shows the analysis results.
The used UV-absorbing monomer was as mentioned above.

### Comparative Example 2

A pellet (11A), a film (11B), and a film after heating (11C) were obtained in the same manner as in Example 1, except that 45 parts of MMA and 5 parts of RUVA-93 were used as polymerized monomers and the cyclized condensation reaction after the polymerization was not performed.

### Example 10

A pellet (12A), a film (12B), and a film after heating (12C) were obtained in the same manner as in Example 1, except that 37.5 parts of MMA, 5 parts of MHMA, and 7.5 parts of RUVA-93 were used as polymerized monomers, and 0.05 parts of phosphoric acid 2-ethylhexyl (product of SAKAI CHEMICAL INDUSTRY CO., LTD., trade name: Phoslex A-8) was used as a catalyst for the cyclized condensation reaction.

### Example 11

A pellet (13A), a film (13B), and a film after heating (13C) were obtained in the same manner as in Example 1, except that 35 parts of MMA, 5 parts of MHMA, and 10 parts of RUVA-93 were used as polymerized monomers, and 0.05 parts of phosphoric acid 2-ethylhexyl (product of SAKAI CHEMICAL INDUSTRY CO., LTD., trade name: Phoslex A-8) was used as a catalyst for the cyclized condensation reaction.

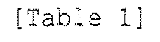

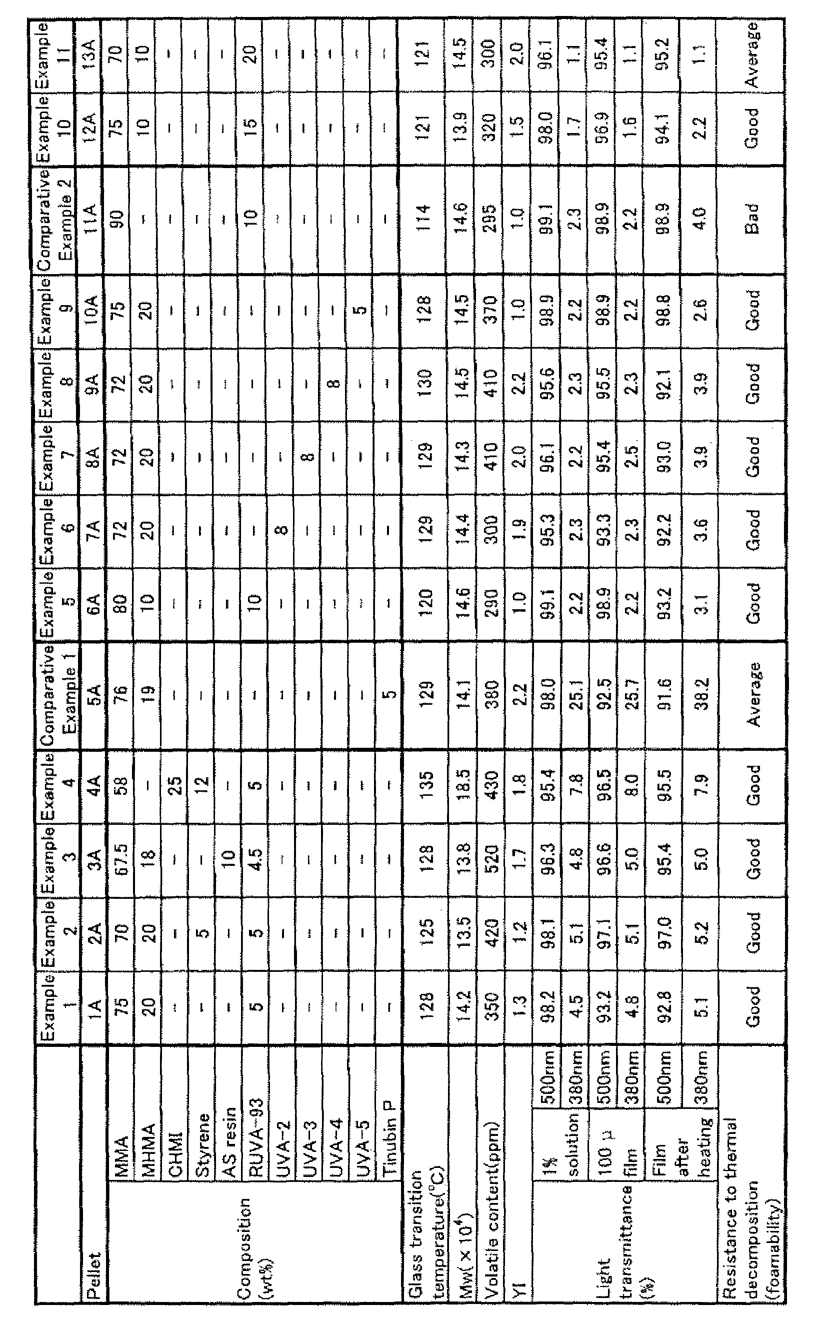

Polymers having compositions shown in Table 2, respectively, were obtained by performing polymerization in the same manner as in Example 4, except that each polymer contains polymerized monomers at proportions in Table 2. Then, extruded films were prepared in the same manner as in Example 1. In Table 2, PMI shows phenylmaleimide.

### "Evaluation of film appearance"

The hue of the films were observed by eyes and evaluated for appearance.
Good: Sufficient
Average: Not sufficient, but good
Bad: Insufficient
"UVA-cutting performance"

Test pieces in 50 x 50 x 1mm were prepared from a commercially available PBT (polybutylene terephthalate) (Toraycon 1100S, product of Toray Industries, Inc.). On the upper surface of the test pieces, the UV-cutting films in Examples 12 and 13 and Comparative Examples 3 and 4 were attached, respectively. The test pieces were irradiated with UV light through the UV-cutting films using a Fade-o-meter produced by Suga Test Instrument Co., Ltd., for 150 hours. Then, the hue change of the PBT test pieces were evaluated by eye observation.
Good: No hue change
Bad: Apparently yellowing

**[Table 2]**

| | | | Example 12 | Comparative Example 3 | Example 13 | Comparative Example 4 |
|---|---|---|---|---|---|---|
| Composition (wt%) | MMA | | 83 | 84 | 68 | 60 |
| | PMI | | 10 | 10 | 15 | 20 |
| | Stylene | | 5 | 5 | 7 | 10 |
| | UVA-2 | | - | - | 10 | 10 |
| | UVA-4 | | 2 | 1 | - | - |
| Glass transition temperature(°C) | | | 121 | 121 | 129 | 135 |
| 100 µ film light transmittance(%) | | 500nm | 91 | 93 | 85 | 77 |
| | | 380nm | 26 | 34 | 2.0 | 1.7 |
| Film appearance | | | Slightly yellow (Good) | Slightly yellow (Good) | Slightly yellow (Average) | yellow-red (Bad) |
| UVA-cutting performance | | | Good | Bad | Good | Good |

The above-mentioned Examples and Comparative Examples clearly show that remarkable effects are exhibited in Examples in which the amorphous thermoplastic resin of the present invention included the UV-absorbingmonomer unit and Comparative Examples in which the UV absorber was added. That is, in comparison with Examples in which the resin included the UV-absorbingmonomer unit and had a glass transition temperature of 120°C or more, in Comparative Example 1 in which the resin included no UV-absorbing monomer unit, the film after heating had an insufficient light transmittance of 38.2. Further, in Comparative Example 2 in which the resin had a glass transition temperature of less than 120°C, the resin had an insufficient resistance to thermal decomposition, which is normally observed in UVA copolymers. In Comparative Example 2, coloring of the resin and foaming were remarkably observed, and the bubble face level largely rose due to the foaming. Examples show that the resistance to thermal decomposition is excellent, and if the polymer has the composition satisfying the glass transition temperature of 120°C or more, the resistance to thermal decomposition is improved to a high level enough for practical use.
Each of the amorphous thermoplastic resins in Examples 1 to 10 is excellent in light transmittance and preferably used in various applications such as an optical application. In comparison with Example 10 in which the content of the UV-absorbing monomer unit is 20% by weight, in Examples 1 to 9 in which the content of the UV-absorbing monomer unit is 15% or less, the resistance to thermal decomposition is more excellent and the coloring of the resin and the foaming were hardly observed. The UVA copolymers generally have insufficient resistance to thermal decomposition. Therefore, as the amount of the UVA unit becomes larger, the insufficient resistance to thermal decomposition is more remarkably observed. It was shown that if the content of the UVA unit is 15% or less, the resin has a sufficiently excellent resistance to thermal decomposition and an excellent UV-absorbing ability.

In the above-mentioned Examples and Comparative Examples, specific UV-absorbing monomers (RUVA-93, UVA-2, UVA-3, UVA-4, and UVA-5) were used. However, as long as ultraviolet UV-absorbing monomers are used, the amorphous thermoplastic resin shows high transparency and high heat resistance and a UV absorbing ability through the same mechanism. Therefore, it can be said that any amorphous thermoplastic resin including the UV-absorbing monomer certainly exhibits the advantageous effects of the present invention. At least, in the case where the amorphous thermoplastic resin is produced by polymerizing a monomer component essentially containing a polymerizable group-introduced benzotriazole derivative or triazine derivative, the above-mentioned Examples and Comparative Examples sufficiently verify the advantageous effects of the present invention and support the technical meanings of the present invention.

### INDUSTRIAL APPLICABILITY

The amorphous thermoplastic resin of the present invention has the above-mentioned configuration. The present invention has an object to provide an amorphous thermoplastic resin having high transparency and high heat resistance and a UV-absorbing ability.

## Claims

1. An amorphous thermoplastic resin comprising a UV-absorbing monomer unit and having a glass transition temperature of 120°C or more.

2. The amorphous thermoplastic resin according to Claim 1,
wherein the amorphous thermoplastic resin has a light transmittance of 80% or more at 500 nm and a light transmittance of less than 30% at 380 nm when the resin has a thickness of 100 µm.

3. The amorphous thermoplastic resin according to Claim 1 or 2, which contains 15% by weight or less of the UV-absorbing monomer unit.

4. The amorphous thermoplastic resin according to any of Claims 1 to 3,
wherein the amorphous thermoplastic resin has a lactone ring structure represented by the following formula (1): 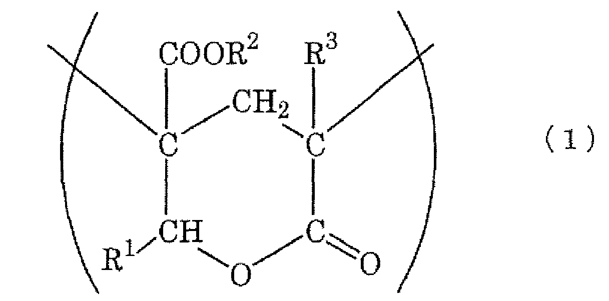 in the formula, R¹, R², and R³ each independently represents a hydrogen atom or an organic residue containing 1 to 20 carbon atoms; and the organic residue may contain one or more oxygen atoms.

5. An extruded film or sheet made of the amorphous thermoplastic resin of any of Claims 1 to 4.
